# EUROPÄISCHE PATENTANMELDUNG

(11) **EP 4 838 180 A1**
(43) Veröffentlichungstag der Anmeldung: **11.11.2026**
(21) Anmeldenummer: 26163545.2
(22) Anmeldetag: 10.03.2026
(51) Int. Cl.: G01D 9/00, G06N 20/00, G01D 21/00

(54) **DYNAMISCHES MESSVERFAHREN UNTER DER VERWENDUNG VON KÜNSTLICHER INTELLIGENZ**

(30) Priorität: 09.05.2025 DE 102025117813
(71) Anmelder: IPETRONIK GmbH & Co. KG, 76532 Baden-Baden (DE)
(72) Erfinder: SCHMIDT-OTTO, Stefan, 42655 Solingen (DE); JÄGER, Frank Ernst, 40231 Düsseldorf (DE); BORGHOFF, Stefan Patrick, 47279 Duisburg (DE)
(74) Vertreter: Meissner Bolte Partnerschaft mbB

(57) **Zusammenfassung**

Offenbart ist ein Verfahren zum Konfigurieren eines Datenloggers mittels eines Logger-KI-Systems, umfassend vor dem Messbetrieb: Erstellen einer Messkonfiguration durch einen Anwender mit Hilfe eines KI-Messungsassistenten; während des Messbetriebs: Einsetzen eines trainierten Logger-KI-Systems, um relevante Messverläufe oder Messwerte zu identifizieren; und dynamisches Speichern der relevanten Messverläufe oder Messwerte in einer Datei. Offenbart ist auch ein KI-basiertes System zum dynamischen Messen, umfassend einen KI-Messungsassistenten, der einem Anwender ermöglicht eine Messkonfiguration vor dem Messbetrieb zu erstellen; und ein trainiertes Logger-KI-System, das ausgelegt ist, während des Messbetriebs, relevante Messverläufe oder Messwerte zu identifizieren.

## Beschreibung

### Gebiet der Erfindung

Die Erfindung betrifft das Gebiet des Datenlogging und insbesondere das Logging von Daten aus Messsystemen.

### Hintergrund der Erfindung

Das Logging (Protokollierung, Aufzeichnung) von Daten, insbesondere von Daten aus technischen Messsystemen, ist ein wichtiges technisches Gebiet, bei dem große Mengen an Daten anfallen können, die anschließend analysiert werden. Datenlogger ermöglichen die Überwachung von unterschiedlichen Messgrößen, z.B. Spannungen, Temperaturen oder die Luftfeuchtigkeit, und sind damit vielseitig einsetzbar. Die Verwendung eines elektronischen Datenloggers ist gegenüber einer manuellen periodischen Erfassung wesentlich effektiver, zuverlässiger und präziser. Datenlogger sind elektronische Geräte, die Messdaten von verschiedenen Sensoren, wie beispielsweise Luftfeuchtigkeit, Temperatur, Drucksignale oder Spannung, sammeln. Der Datenlogger enthält Anschlüsse für Sensoren und nimmt diese Messwerte auf. Diese Messwerte werden im Datenlogger gespeichert und zur Analyse an einen Computer übertragen. Die Messwerte werden dabei mit einem Zeitstempel dokumentiert und können im Anschluss mithilfe einer Software analysiert und ausgewertet werden. Beim Datenlogging wird typischerweise so vorgegangen, dass ein Anwender einen Datenlogger manuell konfiguriert, indem der Anwender eine Auswahl von Messsignalen vor Beginn des Messbetriebs vornimmt. Während des Logging wird keine Änderung der Messsignale vorgenommen, so dass dieses Vorgehen als statisches Messverfahren anzusehen ist, welches den Nachteil aufweist, dass es nicht erlaubt, flexibel auf unvorhergesehene Ereignisse oder Messsignale zu reagieren und die Messstrategie während des Betriebs anzupassen. Im Gegensatz dazu erlaubt das erfindungsgemäße System, die statische Natur bisheriger Messverfahren zu überwinden, indem es ein dynamisches Messverfahren vorschlägt.

### Kurze Beschreibung der Zeichnungen

Nachstehend werden Ausführungsbeispiele der Erfindung anhand der Figuren näher erläutert.
Fig. 1 zeigt einen Ablauf eines Verfahrens zum statischen Messen gemäß dem Stand der Technik.
Fig. 2 zeigt einen Ablauf eines erfindungsgemäßen Verfahrens zum dynamischen Messen von Signalwerten.
Fig. 3 zeigt einen Grobaufbau eines erfindungsgemäßen Systems zum dynamischen Messen von Signalwerten.
Fig. 4 zeigt einen detaillierten Aufbau eines erfindungsgemäßen Systems zum dynamischen Messen von Signalwerten.
Fig. 5 zeigt eine von einem erfindungsgemäßen System erzeugte Messdatei und gekennzeichnete Messwerte.

### Beschreibung

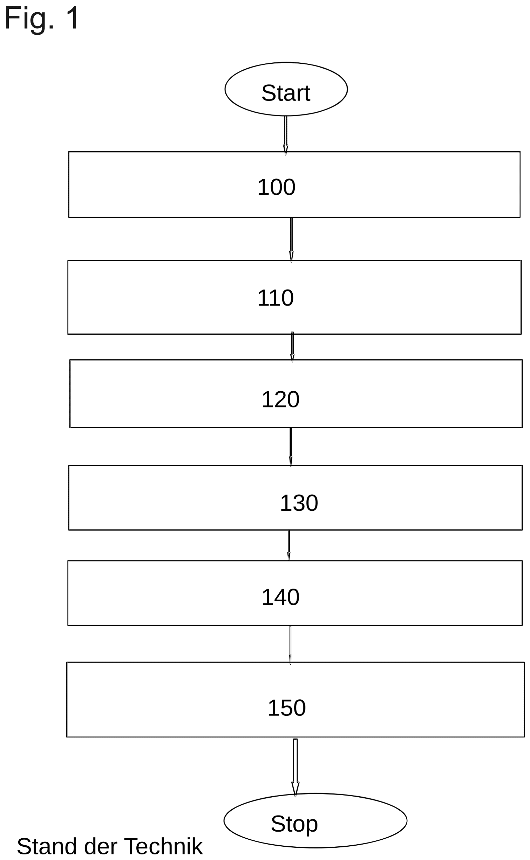

Fig. 1 zeigt einen Ablauf eines Verfahrens zum statischen Messen gemäß dem Stand der Technik. Bevor auf die Einzelheiten der Fig. 1 eingegangen wird, sollen einige Elemente der Erfindung diskutiert werden.

Das erfindungsgemäße Verfahren verbindet zwei KI-Systeme, nämlich einen KI-Messungsassistenten mit einer Logger KI, um ein dynamisches Messverfahren bereitzustellen, das eine erhebliche Verbesserung der Effizienz und Präzision in der Messungsauswertung erzielt sowie die zu speichernde Datenmenge reduziert. Ein KI-System ist ein System, das eine Komponente enthält, deren Ausgaben auf Verarbeitungs- bzw. Entscheidungsmustern beruhen, die sie zuvor in einer Lernphase auf Basis großer Datenmengen selbst generiert hat. Die vorliegende Erfindung bietet eine innovative Methode zur Optimierung von Messvorgängen, indem sie die Fähigkeiten künstlicher Intelligenz mit fortschrittlicher Datenerfassungstechnologie kombiniert. Mit anderen Worten setzt die Erfindung künstliche Intelligenz in zweifacher Hinsicht ein, einmal um Eingaben zu verstehen und relevante Informationen daraus zu extrahieren, um daraus eine Messkonfiguration für einen Datenlogger zu erstellen und das andere Mal innerhalb eines Logger-KI-Systems, um relevante Signale zu erfassen. Es kann hier einen Synergieeffekt geben. Der KI-Messungsassistent kann über den Signalnamen und weitere Eigenschaft des Signals das Logger-KI-System bei der Auswertung unterstützen, z.B. welche Signale sollten miteinander wie analysiert und ausgewertet werden, da sie z.B. ähnliche Namen bzw. Eigenschaften haben.

Einige Ausführungsformen betreffen ein KI-basiertes dynamisches Messverfahren, umfassend vor dem Messbetrieb: Erstellen einer Messkonfiguration durch einen Anwender mit Hilfe eines KI-Messungsassistenten; während des Messbetriebs: Einsetzen eines trainierten Logger-KI-Systems, um relevante Messverläufe oder Messwerte zu identifizieren; und dynamisches Speichern der relevanten Messverläufe oder Messwerte in einer Datei. In einigen Ausführungsformen erfolgt das Training über eine Konfigurations- und Auswertungssoftware. Ein Sammeln an positiven und negativen Rückmeldungen (Reaktion des Logger-KI-Systems) erfolgt bei Messungsbetrieb oder auch nachträglich bei der Analyse der Messung / KI-Rückmeldung.

In einigen Ausführungsformen wird ein überwachtes Lernverfahren durchgeführt. In einigen Ausführungsformen stellt ein Fahrer eine korrekte oder inkorrekte Reaktion des dynamischen Messverfahrens im Betrieb fest und gibt dem System über einen Input eine Rückmeldung, ob diese Reaktion korrekt oder inkorrekt gewesen ist. Ein Messauswerter (Experte) schaut sich die Messaufzeichnungen und eine KI-Auswertung an und gibt entsprechend eine Rückmeldung, ob dies korrekt oder inkorrekt ist.

In einigen Ausführungsformen wird ein unüberwachtes (unsupervised) Lernverfahren (Machine Learning) durchgeführt. Für ein dynamisches Messverfahren werden bei bestimmten Auswertungen Referenzmessungen hinterlegt. Über eine Konfigurationssoftware mittels der Referenzmessungen wird das Logger-KI-System trainiert, welche Eigenschaften des Signalwerts je Signalverlauf und als auch in Abhängigkeit mit anderen Signalen gültig ist. Sollten neu bessere oder aktuellere Referenzmessungen vorliegen, wird das Logger-KI-System über die Konfigurationssoftware wieder trainiert.

In einigen Ausführungsformen ist ein KI-Messungsassistent ein Programm oder Software, welches einen Anwender unterstützt, eine Messkonfiguration für einen Messvorgang zu erstellen. Der KI-Messungsassistent interagiert mit dem Anwender, um dessen spezifische Messanforderungen zu verstehen, beispielsweise welche Signale aufgezeichnet werden sollen und welche Messanomalien überwacht werden sollen. Ein Messvorgang beruht auf einer Messaufgabe oder Messziel. In einigen Ausführungsformen ist das Ergebnis aus Messaufgabe und Ziel identisch. In einigen Ausführungsformen wird bei der Messaufgabe die Tätigkeit beschrieben, was aufgezeichnet werden soll und beschreibt damit deutlich mehr als ein Messziel. In einigen Ausführungsformen ist die Messaufgabe beispielsweise eine Aufzeichnung, wenn Geschwindigkeit > 20 km/h und Geräusch > 20 dB und hält länger als 2 Sekunden. In einigen Ausführungsformen ist das Messziel die Erkennung von lauten Geräuschen bei der Fahrt. In einigen Ausführungsformen wird die Messaufgabe oder das Messziel natürlichsprachlich bzw. mündlich vorgetragen. Beispielsweise möchte ein Anwender Temperaturen an verschiedenen Orten innerhalb eines technischen Systems, z.B. einem chemischen Prozessreaktor messen, und spezifische Anomalien erkennen. Eine Messaufgabe kann auch eine komplexere Aufgabe sein, die zusammen mit weiteren Eingaben durch die Künstliche Intelligenz, z.B. ein LLM, des Messungsassistenten ausgewertet wird. Da der Messungsassistent KI gestützt ist, analysiert er alle vorhandenen Eingaben und kann daraus eine Messkonfiguration erstellen. Der Messungsassistent interagiert mit dem Anwender, um dessen spezifische Messanforderungen zu verstehen, beispielsweise welche Signale aufgezeichnet und welche Messanomalien überwacht werden sollen. Dies geschieht vor dem Messbetrieb. Die Messkonfiguration wird dann auf einen KI-gestützten Datenlogger hochgeladen werden, der dann einen Messstrom in Echtzeit überwacht. In einem derartigen Messsystem können während des Betriebs sehr große Datenmengen anfallen, die unter Umständen nicht alle gespeichert werden können oder sollen. Deshalb trifft das System eine Auswahl, welche Daten, d.h. die für die Messaufgabe relevanten Daten letztlich in einer Messungsdatei gespeichert werden.

In einigen Ausführungsformen erhält der KI-Messungsassistent eine vom Anwender definierte Messaufgabe und/oder Messziel sowie Schnittstellenbeschreibungen und Beschreibungsdateien als Eingabe, um relevante Informationen aus der Eingabe zu erkennen und diese dem Logger-KI-System bereitzustellen. In einigen Ausführungsformen enthält eine ASAP2-Beschreibungsdatei (auch A2L genannt) alle Informationen über die relevanten Datenobjekte im Steuergerät, wie beispielsweise Paramter, Kennfelder, reale und virtuelle Messgrößen, Strukturen und Variantenabhängigkeiten. Für jedes dieser Objekte werden Informationen wie Speicheradresse, Ablagestruktur, Datentyp und Umrechnungsvorschriften zur Wandlung in physikalische Einheiten benötigt. Darüber hinaus beinhaltet eine A2L-Datei auch die Parameter für die Kommunikation zwischen XCP-Master (z.B. CANape) und XCP-Slave im Steuergerät. In einigen Ausführungsformen ist in der Schnittstellenbeschreibung die Informationen der Hardware-Ausstattung des Logger-KI-Systems (wie Interfaces und deren Eigenschaften) enthalten. In einigen Ausführungsformen enthält die Beschreibungsdatei die Informationen über den Bus (Protokoll) und die Signale und Signalwerte, die auf dem Interface des Logger-KI-Systems angeschlossen und auf dem Bus gesendet werden. Die Beschreibungsdatei (DBC-Datei) ist eine ASCIIbasierte Übersetzungsdatei, die verwendet wird, um den in einem CAN-Frame übertragenen Daten identifizierenden Namen, Skalierungen, Offsets und definierende Informationen zuzuweisen. Für jede CAN-ID kann eine DBC-Datei einige oder Daten innerhalb des CAN-Frames identifizieren. In einigen Ausführungsformen enthält eine ASAP2-Beschreibungsdaten (auch A2L genannt) alle Informationen über dieDas Logger-KI-System selektiert relevante Signale aus einem Signalpool und Ziel- und Normalwerte werden für jeweilige Signale definiert. In einigen Ausführungsformen der Erfindung kann der Signalpool bis zu 10.000 Signale umfassen. In einigen Ausführungsformen ist ein Logger-KI-System ein KI-basierter Datenlogger, d.h. beispielsweise eine prozessorgespeicherte Speichereinheit, welche Daten in einem bestimmten Rhythmus über eine Schnittstelle aufnimmt und auf einem Speichermedium ablegt. Dies kann in einigen Ausführungsformen durch eine Software geschehen, wenn die zu loggenden Informationen beispielsweise innerhalb eines Computers schon in digitaler Form vorliegen und nur aufbereitet werden müssen. In anderen Ausführungsformen kann ein Logger-KI-System, falls die Informationen nur in nichtelektrischer Form vorhanden sind, aus einer speziellen mit Sensoren kombinierten Hardware bestehen, die physikalische Messdaten über eine bestimmte Zeit hinweg erfassen wie beispielweise Temperatur, Stromstärke, Spannung, Drucke, Kraft- und Drehmoment, Durchfluss, pH-Wert, Helligkeit und Beschleunigung. In einigen Ausführungsformen sind die Sensoren mechanischer, thermoelektrischer, resistiver, piezoelektrischer, kapazitiver, induktiver, optischer, akustischer, oder magnetischer Natur. In einigen Ausführungsformen besteht ein Datenlogger aus einem programmierbaren Mikroprozessor, einem Speichermedium, mindestens einer Schnittstelle zu einem oder mehreren Kanälen zum Anschluss der Datenquelle wie z.B. Sensoren. In einigen Ausführungsformen erfolgt die Datenaufnahme extern oder intern über eine herstellerabhängige Schnittstelle.

In einigen Ausführungsformen erkennt ein Large Language Model die relevanten Informationen aus der Eingabe und stellt diese dem Logger-KI-System bereit. Ein Large Language Model, kurz LLM, ist ein Sprachmodell, das sich durch seine Fähigkeit zur Textgenerierung auszeichnet. Es handelt sich um ein computerlinguistisches Wahrscheinlichkeitsmodell, das statische Wort- und Satzfolge-Beziehungen aus einer Vielzahl von Textdokumenten durch einen rechenintensiven Trainingsprozess erlernt hat. LLMs sind im weiteren Sinne künstliche neuronale Netze und werden (a priori) entweder durch selbstüberwachtes Lernen oder halbüberwachtes Lernen trainiert. LLMs arbeiten als selbstanpassende Sprachmodelle, die verschiedene Aufgaben in natürlicher Sprache ausführen können, z.B. das Zusammenfassen, Übersetzen, Vorhersagen und Erstellen von Texten. Um Kunden die Loggerkonfiguration über natürliche Sprache zu ermöglichen, wird ein leistungsstarkes, bereits trainiertes Large Language Model, wie beispielsweise ChatGPT von OpenAI, verwendet. Dazu erfolgt in der der Konfigurationssoftware eine direkte Anbindung an eine online verfügbares LLM über eine API. Durch gezieltes Prompt-Engineering sowie sorgfältige Aufbereitung der Eingabedaten - darunter Beschreibungsdateien, Schnittstellenspezifikationen, Messziele und Messaufgaben - sowie detaillierte Informationen über das System und dessen Funktionen, wird das LLM befähigt, die vom Kunden vorgegebene Messaufgabe zu verstehen und selbständig in eine geeignete Loggerkonfiguration umzusetzen.

In einigen Ausführungsformen werden Ausreißer und Abweichungen von einem Normwert während des Messbetriebs detektiert.

In einigen Ausführungsformen wird während des Messbetriebs auf unvorhergesehene Ereignisse oder Messsignale flexibel reagiert, um eine Messstrategie anzupassen.

In einigen Ausführungsformen umfasst das Logger-KI-System eine trainierte KI auf Standardüberprüfungen bzw. Standardmessauswertungen und eine trainierte KI auf kundenspezifische Überprüfungen.

In einigen Ausführungsformen wird für Standardüberprüfungen eine KI mithilfe von Methoden des Supervised Learning trainiert, um Messanomalien zuverlässig zu erkennen.

In einigen Ausführungsformen umfassen Standardüberprüfungen einen Vergleich von einem oder mehreren von identischen Signalen, Erkennung zeitlicher Signalwertverschiebungen, Signalwertaussetzer (No-Value-Ereignisse), Signaldrift, Signalwertabfolge, Signalwertausreißer, ungültige Signalwerte sowie die Überprüfung auf korrekte Signalverläufe. Bei der dynamischen Auswertung wird für jedes zu untersuchende Signal ein Referenzsignal definiert. Dieses Referenzsignal kann entweder aus einer bereits bestehenden Messung stammen oder direkt während der Messung parallel vom Logger empfangen werden. Durch den Einsatz von modernen Algorithmen können die charakteristischen Merkmale der Messdaten vorab oder auch während des Betriebes erkannt, komprimiert und für die anschließende Anomalieerkennung bereitgestellt werden. Diese KI-Lösung steht den Kunden unmittelbar und ohne zusätzlichen Anpassungsaufwand zur Verfügung.

In einigen Ausführungsformen werden kundenspezifische Prüfungen vorgenommen. Die KI-basierte Auswertung für kundenspezifische Prüfungen gliedert sich in zwei Bereiche: Signalbasierte KI-Auswertung (analog zur Standardüberprüfung) und KI-Auswertung *mit* oder *ohne* Referenzmessung, wobei die KI-Auswertung *mit* oder *ohne* Referenzmessung jeweils auf einem Unsupervised-Lernverfahren basiert.

In einigen Ausführungsformen wird eine signalbasiere KI-Auswertung vorgenommen, wobei ähnliche Prinzipien angewandt werden wir bei der KI für Standardüberprüfungen. In einigen Ausführungsformen besteht die Möglichkeit, über eine Konfigurationssoftware individuelle KI-Auswertungen zu erstellen und diese gezielt mittels Referenzsignalen auf Signalbasis für Anomalieerkennungen zu trainieren.

In einigen Ausführungsformen wird eine Unsupervised KI-Auswertung *mit* Referenzmessung vorgenommen. In diesen Ausführungsformen wird eine komplette Kundenmessung als Referenz für das gesamte Messsystem verwendet. Hierbei sind alle oder zumindest ein Großteil der Signale bereits in der Referenzmessung vorhanden und werden über die Konfigurationssoftware dem System zugeordnet. Im Gegensatz zur Standardprüfung erfolgt hier keine explizite Auswahl eines spezifischen Auswertungsalgorithmus. Stattdessen extrahiert die KI automatisch wesentliche Merkmale der Signale und deren Kombinationen aus der Referenzmessung. Die entsprechenden Ausnahmesituationen werden dazu im Referenzsignal in der grafischen Benutzerschnittstelle (GUI) gekennzeichnet. Während des Messbetriebs werden diese extrahierten Merkmale in Echtzeit mit den aktuell aufgezeichneten Messwerten abgeglichen. Auf diese Weise erkennt die KI, welche Signalwertkombinationen sowohl im Signalverlauf als auch im Zusammenhang aller weiteren aufgezeichneten Signale zu jedem Zeitpunkt gültig sind.

In einem Anwendungsbeispiel definiert sich ein Fehler durch eine vorher unbekannte Abweichung. Ein Kunde möchte mit der Messtechnik die Qualität seiner Entwicklung prüfen und validieren. Nach dem aktuellen Stand der Technik muss er bei der Konfiguration bereits wissen, wo und welche Fehler auftreten könnten, was definitionsgemäß unmöglich ist. Mit der vorgeschlagenen Methode können jedoch sämtliche Messsignale und deren gegenseitige Abhängigkeiten anhand der Referenzmessung validiert werden, ohne dass vorab spezifische Prüfungen konfiguriert werden müssen.

In einem anderen Anwendungsbeispiel tritt während einer Erprobungsfahrt bei 120 km/h ein bisher unbekanntes Geräusch auf, das in der Referenzmessung nicht vorhanden ist. Die KI erkennt diese Situation automatisch als Anomalie. Im Gegensatz zum aktuellen Stand der Technik, bei dem nach der Fahrt zunächst die Loggerkonfiguration angepasst und anschließend die Testfahrt wiederholt werden müsste - stets mit der Unsicherheit, ob der Fehler erneut auftritt -, ermöglicht die vorgeschlagene Methode eine direkte und sofortige Erkennung und Dokumentation der Anomalie.

In einigen Ausführungsformen wird eine Unsupervised KI-Auswertung *ohne* Referenzmessung vorgenommen. Bei einem Unsupervised-Lernverfahren werden aktuelle Messwerte nicht mit einer festen Referenzmessung, sondern mit den zuvor aufgezeichneten Daten innerhalb derselben Messung abgeglichen. Die KI überwacht das System kontinuierlich auf Anomalien oder Abweichungen im Vergleich zum bisherigen Messverlauf. Erkannte Auffälligkeiten werden automatisch an das Messsystem gemeldet, welches dann entsprechend der Konfiguration entweder eine Aufzeichnung startet, den Nutzer informiert oder den genauen Zeitpunkt und Kontext der erkannten Anomalie für weitere Analysen dokumentiert. Eine derartige Analyse kann je nach Ressourcen des Logger für einige Signale bis hin zu allen Signalen gemeinsam erfolgen.

In einigen Ausführungsformen wird die KI-Auswertung mittels Kundenfeedback und einem Supervised-Lernverfahren optimiert. Der Anwender hat im laufenden Messbetrieb die Möglichkeit, der KI über ein Interface - beispielsweise per Display, Knopfdruck oder Spracheingabe - direktes Feedback zur aktuellen Auswertung zu geben (z. B. "Erkennung korrekt" oder "Erkennung nicht korrekt"). Zusätzlich kann nach Abschluss der Messung während der Analyse der Aufzeichnung und der von der KI erkannten Anomalien in der Konfigurationssoftware nachträglich eine Rückmeldung erfolgen. Dieses Feedback dient dazu, die KI gezielt an kunden- bzw. anwendungsspezifische Anforderungen anzupassen und die Erkennungsgenauigkeit weiter zu verbessern. Das anschließende Training der KI kann entweder direkt auf dem Logger oder extern auf einem PC mit angeschlossenem Logger durchgeführt werden. Die daraus resultierende, angepasste KI-Logik kann anschließend auf weitere Logger übertragen werden, um auch dort von der verbesserten Anomalieerkennung zu profitieren.

In einigen Ausführungsformen steht das Logger-KI-System mit einer KI-Wissensdatenbank in Kommunikation und KI-Wissen wird in die KI-Wissensdatenbank exportiert und KI-Wissen wird aus der KI-Wissensdatenbank in das Logger-KI-System importiert. Eine Wissensdatenbank ist eine Datenbank für das Hinterlegen von Wissen.

Einige Ausführungsformen umfassen ferner ein Anzeigen relevanter Messwerte in einer Online-Anzeige.

In einigen Ausführungsformen werden die relevanten Messwerte in einem Logfile oder einer Cloud gespeichert.

In einigen Ausführungsformen werden Beschreibungsdateien, Schnittstellenbeschreibungen, ein Messziel und eine Messaufgabe in ein Sprachmodell eingegeben, das trainiert ist, um relevante Informationen zu erkennen und auszuwerten.

Einige Ausführungsformen umfassen ein computerlesbares Medium, auf welchem computerlesbare Instruktionen gespeichert sind, die, wenn sie von einem oder mehreren Prozessoren gelesen werden, den einen oder mehreren Prozessoren veranlassen, das Verfahren nach einem der vorhergehenden Ansprüche durchzuführen.

Einige Ausführungsformen betreffen ein KI-basiertes System zum dynamischen Messen, umfassend: einen KI-Messungsassistenten, der einem Anwender ermöglicht eine Messkonfiguration vor dem Messbetrieb zu erstellen; und ein trainiertes Logger-KI-System, das ausgelegt ist, während des Messbetriebs, relevante Messverläufe oder Messwerte zu identifizieren.

Einige Ausführungsformen betreffen ein computerlesbares Medium, auf welchem computerlesbare Instruktionen gespeichert sind, die, wenn sie von einem oder mehreren Prozessoren gelesen werden, den einen oder mehreren Prozessoren veranlassen, das Verfahren nach einem der vorhergehenden Ausführungsformen durchzuführen.

Einige Ausführungsformen betreffen ein KI-basiertes System zum dynamischen Messen, welches umfasst einen KI-Messungsassistenten, der einem Anwender ermöglicht eine Messkonfiguration vor dem Messbetrieb zu erstellen; und ein trainiertes Logger-KI-System, das ausgelegt ist, während des Messbetriebs, relevante Messverläufe oder Messwerte zu identifizieren.

Einige Ausführungsformen betreffen ein System, welches eine KI-Wissensdatenbank umfasst, die ausgelegt ist, KI-Wissen aus dem trainierten Logger-KI-System zu importieren und in das Logger-KI-System zu exportieren; und einen Messkern, der ausgelegt ist, Messwerte von Messschnittstellen zu empfangen, einen Messstrom aller Messwerte an das Logger-KI-System zu senden, relevante Zeitbereiche und Messsignale vom Logger-KI-System zu empfangen und relevante Messwerte in einer Messungsdatei zu speichern.

Einige Ausführungsformen betreffen ein System, in welchem Messwerte gemessen werden. Die Messwerte umfassen wenigstens eines von gemessene Temperatur, Beschleunigung, Druck und Spannung.

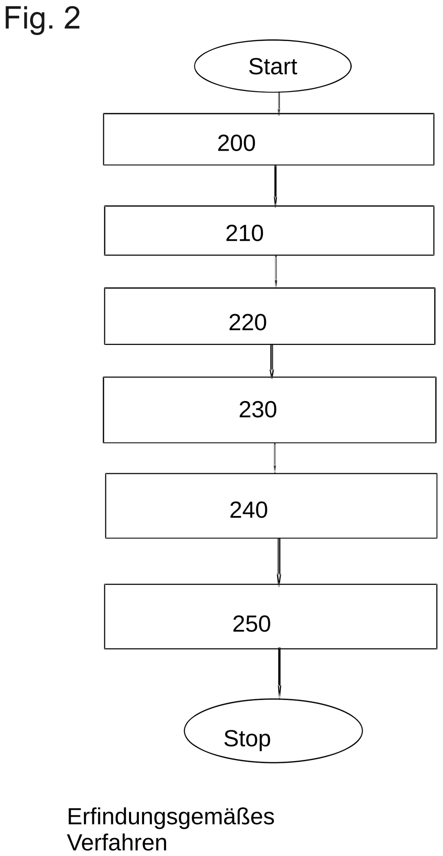

Fig. 1 zeigt einen Ablauf eines Verfahrens zum statischen Messen gemäß dem Stand der Technik. Vor dem eigentlichen Messbetrieb erstellt bei 100 ein Anwender auf einem Laptop eine Messkonfiguration. Der Laptop enthält einen Logger mit einer Konfigurationssoftware, die es erlaubt, eine Messkonfiguration zu erstellen. Die Messkonfiguration entspricht beispielsweise einer Messaufgabe oder einem Messziel. Die Messaufgabe bzw. das Messziel sind beispielsweise die Werte und Signale, auf die geachtet werden sollen. Aus der Messkonfiguration wird eine Loggerkonfiguration erstellt, welche eine Schnittstellenkonfiguration und Speicheranweisungen umfasst. In einigen Ausführungsformen enthält die Messkonfiguration (oder auch Konfigurationsdatei genannt) die Beschreibungsdateien und weitere Informationen, was der Kunde in der Konfigurationssoftware eingestellt hat. Die Datei kann nachträglich wieder in der Konfigurationssoftware geladen werden, um die Konfiguration wiederherzustellen. In einigen Ausführungsformen wird die Loggerkonfiguration aus der Konfigurationsdatei für den Logger erstellt und auf den Logger hochgeladen, so dass der Logger sich entsprechend einstellen/konfigurieren kann. Die Speicheranweisungen sind Trigger, Signale und Zeitpunkte, zu denen eine Speicherung erfolgen soll. Bei 110 wird diese Loggerkonfiguration auf den Logger hochgeladen. Der Logger umfasst einen Messkern, welcher Werte mit vordefinierten Speicheranweisungen speichert bei 120. Diese Art der Speicherung ist als statische Speicherung anzusehen, da der Anwender vor dem Messbetrieb festlegt, welche Messwerte wann vom Messkern gespeichert werden. Nach Ablauf der statischen Messung wird die Messung bei 130 vom Logger auf den Laptop des Anwenders heruntergeladen. Auf dem Laptop befindet sich eine Logger-Messungsauswertungssoftware, die bei 140 die Messung analysiert und die relevanten Messwerte extrahiert. Bei 150 werden diese relevanten Messwerte, sofern in der vordefinierten Speicheranweisung enthalten, abgespeichert. Dieses statische Messverfahren hat den Nachteil, dass während des Messbetriebs keine Änderung der Messstrategie erfolgen kann und nicht flexibel auf unvorhergesehene Ereignisse reagiert werden kann. Diese Nachteile werden durch das in Fig. 2 dargestellte erfindungsgemäße Verfahren überwunden.

Fig. 2 zeigt ein erfindungsgemäßes dynamisches Messverfahren. Bei 200 erstellt der Anwender auf einem Laptop, auf dem ein Logger mit Konfigurationssoftware gespeichert ist und ein KI-Messungsassistent (LLM) Messungen vornimmt. Aus der Messkonfiguration ergibt sich eine entsprechende Loggerkonfiguration, die eine Schnittstellenkonfiguration und eine Messaufgabe/Messziel umfasst. Die Messaufgabe bzw. das Messziel sind die Ereignisse bzw. Signale, auf die geachtet werden sollen. Bei 210 wird die Loggerkonfiguation auf den Logger hochgeladen, welcher einen Messkern umfasst. Der Messkern speichert Messwerte temporär. Der Messkern steht in Kontakt mit einer Logger-KI, die KI-Auswertungswissen und eine Messaufgabe umfasst. Die KI speichert bei 230 abhängig von Signalwerten die relevanten Messwerte aller konfigurierten Messschnittstellen. In einigen Ausführungsformen bedeutet "abhängig von Signalwerten", dass die Signalwerte nur gespeichert werden, falls sie eine Abweichung von der Norm darstellen. Um Speicherplatz auf dem Logger zu sparen, ist eine Option, dass nur die Signale/Werte in einer Messung gespeichert werden, wenn eine Abweichung von der KI festgestellt wird. Eine weitere Option ist, dass der Kunde die Signalwerte unabhängig von einer Abweichung speichern möchte. In diesem Fall wird zu den Signalwerten in der Messung auch die erkannte Abweichung (durch die KI-Erkennung) in der Messung gespeichert. In der Analysesoftware werden die Abweichungen über ein spezielles zusätzliches Signal dargestellt. In einigen Ausführungsformen werden die Signalwerte nur gespeichert, falls sie eine Abweichung von der Norm darstellen. Die Logger-KI ist in der Lage Ausreißer und Abweichungen vom Normwert zu detektieren. Basierend darauf wird die Messung gespeichert.

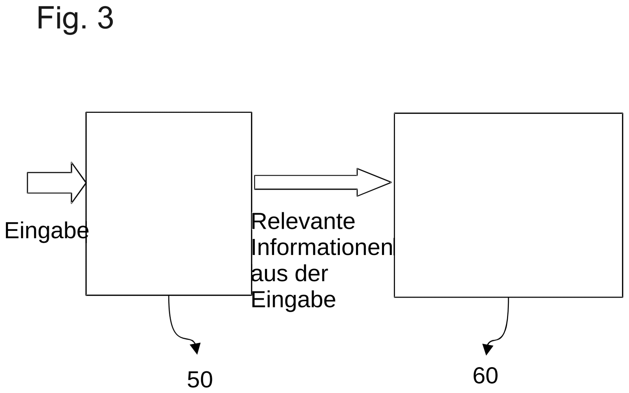

Fig. 3 zeigt einen Grobaufbau eines erfindungsgemäßen Systems zum dynamischen Messen von Messsignalen, um das Zusammenwirken der beiden KI-Systeme, einem KI-Messungsassistenten 50 und einem KI-Logger-System 60, zu veranschaulichen. Der KI-Messungsassistent 50 erhält Eingaben und interagiert mit einem Anwender, um vor dem Messbetrieb eine Messkonfiguration zu erstellen. Der KI-Messungsassistent 50 analysiert eine Eingabe und stellt relevante Informationen aus der Eingabe dem Logger-KI-System 60 bereit. Während des Messbetriebs wird ein trainiertes Logger-KI-System 60 eingesetzt, um relevante Messverläufe oder Messwerte zu identifizieren. Relevant Messverläufe oder Messwerte werden dynamisch in einer Datei gespeichert.

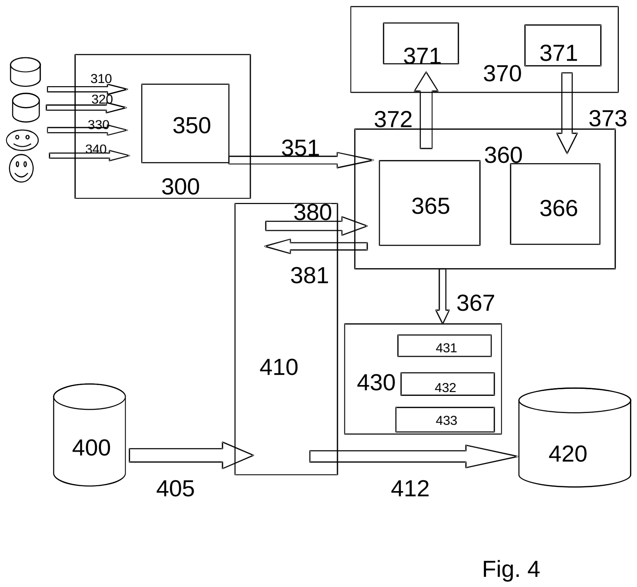

Fig. 4 zeigt ein erfindungsgemäßes System zum dynamischen Messen von Messsignalen. Das System umfasst einen KI-Messungsassistenten 300, der einem Anwender erlaubt, offline eine Messkonfiguration zu erstellen. Der KI-Messungsassistent 300 erhält als Eingabe Beschreibungsdateien 310 und eine Loggerkonfiguration 320 zu. Ferner gibt ein Anwender ein Messziel 330 und eine Messaufgabe 340 ein. Das Messziel 330 bzw. Messaufgabe 340 sind die Aspekte, auf die bei der Messung geachtet werden sollen. In einigen Ausführungsformen wird die Messaufgabe 340 durch den Anwender natürlichsprachlich bzw. mündlich vorgetragen. Die Beschreibungsdateien 310, Schnittstellenbeschreibungen 320, Messziel 330 und Messaufgabe 340 werden einem Large Language Model 350 zugeführt, das trainiert ist, um relevante Informationen zu erkennen und auszuwerten. Ein Large Language Model 350 ist ein Sprachmodell, das sich durch seine Fähigkeit zur Textgenerierung auszeichnet. Es handelt sich um ein computerlinguistisches Wahrscheinlichkeitsmodell, das statistische Wort- und Satzfolge-Beziehungen aus einer Vielzahl von Textdokumenten durch einen rechenintensiven Trainingsprozess erlernt hat. Die Ausgabe des Large Language Model 350 stellen relevante Informationen aus der Eingabe 351 dar, die an ein Logger-KI-System 360 übergeben werden. Eine Logger-Hardware 400 liefert Messwerte aus Schnittstellen an einen Messkern 410, der einen Messstrom aller Messwerte an das Logger-KI-System 360 liefert, welches eine trainierte KI auf Standardüberprüfungen 365 sowie eine trainierte KI auf kundenspezifische Prüfungen 366 umfasst. Die trainierte KI auf Standardüberprüfungen ist darauf trainiert, Standardereignisse zu erkennen durch Vergleich identischer Signale, No-Value-Ereignisse, Signaldrift, Signalabfolge und Signalwertausreißer. Die trainierte KI auf kundenspezifische Prüfungen 366 ist darauf trainiert kundenspezifische Prüfungen vorzunehmen, z.B. Prüfungen durch Vergleich spezifischer Signale, bestimmter Signalabläufe. Das Logger-KI-System 360 ist in der Lage KI-Wissen in eine KI-Wissensdatenbank 370 zu exportieren 372, damit dieses Wissen aufbewahrt und später, z.B. nach einem Neustart, wieder benutzt werden kann. Zu diesem Zweck kann das Logger-KI-System 360 das extrahierte KI-Wissen aus der KI-Wissensdatenbank 370 wieder importieren. Das extrahierte KI-Wissen kann auch anderen Systemen bereitgestellt werden, die von dem erlernten Wissen profitieren. Das Logger-KI-System 360 liefert relevante Zeitbereiche und Messsignale an den Messkern 410 zurück, der relevante Messwerte in einer Messungsdatei 420 speichert. Die Messungsdatei 420 speichert Messsignale und Messwerte allein in der Messungsdatei 420 oder speichert die Messsignale mit Hervorhebung der relevanten Messsignale und Messwerte. Das Logger-KI-System 360 ist in der Lage, mit der Zeit Signalverläufe und Signalabhängigkeiten immer präziser zu erfassen und zu verstehen. Dadurch kann es sich kontinuierlich weiterentwickeln und optimieren. Das Logger-KI-System 360 liefert relevante Messwerte 367 an ein Anzeigesystem 430, die eine Online-Anzeige 431, ein Logfile 432 und eine Cloud 433 umfasst.

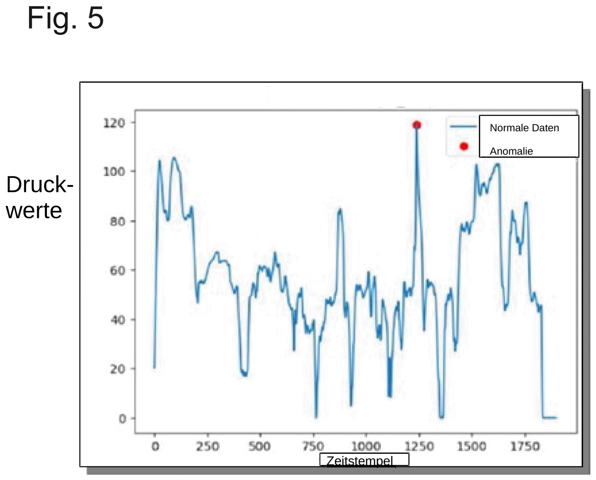

Fig. 5 zeigt eine von dem erfindungsgemäßen System erzeugte Messdatei, in der Anomalien gekennzeichnet sind. Die x-Achse ist die Zeitachse und die y-Achse gibt den Druck an, der in einem chemischen Prozessreaktor herrscht. Das erfindungsgemäße System erkennt bei Zeitstempel 1240 eine Anomalie. Das System ist in der Lage, mit der Zeit Signalverläufe und Signalabhängigkeiten immer präziser zu erfassen und zu verstehen. Dadurch kann es sich kontinuierlich weiterentwickeln und optimieren. Um sicherzustellen, dass dieses gewonnene "Wissen" auch nach einem Neustart des Systems nicht verloren geht, werden die entsprechenden Daten dauerhaft auf dem Logger gespeichert. Das System ist in der Lage die analysierten Signalverläufe und Signalabhängigkeiten und das daraus resultierende "erlernte Wissen" zu exportieren, damit weitere Systeme (wie Logger oder Messsoftware) von dem "erlernten Wissen" profitieren können. Die Systeme verfügen aus diesem Grund auch über eine Importmöglichkeit, damit der Lernprozess nicht auf jedem System separat neu erfolgen muss. Der Kunde kann damit seine eigene Wissensdatenbank zur Analyse von Signalverläufen und Signalabhängigkeiten aufbauen und für weitere Messaufgaben nutzen.

### Liste von Bezugszeichen

- 300: KI-Messungsassistent
- 310: Beschreibungsdateien
- 320: Schnittstellenbeschreibungen
- 330: Messziel
- 340: Messaufgabe
- 50, 350: Large Language Model
- 351: Relevante Informationen aus der Eingabe
- 60, 360: Logger- KI- System
- 365: Trainierte KI auf Standardüberprüfungen
- 366: Trainierte KI auf kundenspezifische Überprüfungen
- 367: Relevante Messwerte
- 370: KI-Wissensdatenbank
- 371: Extrahiertes KI-Wissen
- 372: Export
- 373: Import
- 380: Messstrom aller Messwerte
- 381: Relevante Zeitbereiche und Messsignale
- 400: Logger-Hardware
- 405: Messwerte aller Schnittstellen
- 410: Messkern
- 412: Relevante Messwerte
- 420: Messungsdatei
- 430: Anzeige
- 431: Online Anzeige (App, Mobile App, DriveView)
- 432: Logfile
- 433: Cloud

## Patentansprüche

1. KI-basiertes dynamisches Messverfahren, umfassend
- vor dem Messbetrieb: Erstellen einer Messkonfiguration durch einen Anwender mit Hilfe eines KI-Messungsassistenten;
- während des Messbetriebs:
Einsetzen eines trainierten Logger-KI-Systems, um relevante Messverläufe oder Messwerte zu identifizieren; und
dynamisches Speichern der relevanten Messverläufe oder Messwerte in einer Datei.

2. Verfahren nach Anspruch 1, ferner umfassend, wobei der KI-Messungsassistent eine vom Anwender definierte Messaufgabe und Messziel sowie Schnittstellenbeschreibungen und Beschreibungsdateien als Eingabe erhält, um relevante Informationen aus der Eingabe zu erkennen und diese dem Logger-KI-System bereitzustellen, wobei das Logger-KI-System relevante Signale aus einem Signalpool selektiert und Ziel- und Normalwerte für jeweilige Signale definiert werden.

3. Verfahren nach Anspruch 2, wobei ein Large Language Model die relevanten Informationen aus der Eingabe erkennt und diese dem Logger-KI-System bereitstellt.

4. Verfahren nach einem der vorhergehenden Ansprüche, welches ferner ein Detektieren von Ausreißern und Abweichungen von einem Normwert während des Messbetriebs umfasst.

5. Verfahren nach einem der vorhergehenden Ansprüche, ferner umfassend:
während des Messbetriebs: flexibles Reagieren auf unvorhergesehene Ereignisse oder Messsignale, um eine Messstrategie anzupassen.

6. Verfahren nach einem der vorhergehenden Ansprüche, wobei das Logger-KI-System eine trainierte KI auf Standardüberprüfungen und eine trainierte KI auf kundenspezifische Überprüfungen umfasst.

7. Verfahren nach Anspruch 6, wobei Standardüberprüfungen mittels eines Supervised-Lernverfahrens durchgeführt werden und einen Vergleich von einem oder mehreren von identischen Signalen, NoValue-Ereignisse, Signaldrift, Signalwertabfolge und Signalwertausreißer umfassen.

8. Verfahren nach Anspruch 6, wobei kundenspezifische Überprüfungen mittels einer signalbasierten KI-Auswertung durchgeführt werden oder einer KI-Auswertung mit Referenzmessung oder einer KI-Auswertung ohne Referenzmessung, wobei die KI-Auswertung mit Referenzmessung und die KI-Auswerung ohne Referenzmessung jeweils auf einem Unsupervised-Lernverfahren basieren.

9. Verfahren nach Anspruch 8, wobei die KI-Auswertung durch Feedback mittels eines Supervised-Lernverfahren im laufenden Messbetriebn optimiert wird.

10. Verfahren nach einem der vorhergehenden Ansprüche, wobei das Logger-KI-System mit einer KI-Wissensdatenbank in Kommunikation steht und KI-Wissen in die KI-Wissensdatenbank exportiert und KI-Wissen aus der KI-Wissensdatenbank in das Logger-KI-System importiert.

11. Verfahren nach einem der vorhergehenden Ansprüche, ferner umfassend Anzeigen relevanter Messwerte in einer Online-Anzeige.

12. Verfahren nach einem der vorhergehenden Ansprüche, wobei die relevanten
Messwerte in einem Logfile oder einer Cloud gespeichert werden.

13. Verfahren nach einem der vorhergehenden Ansprüche, in dem
Beschreibungsdateien, Schnittstellenbeschreibungen, ein Messziel und eine Messaufgabe in ein Sprachmodell eingegeben werden, das trainiert ist, um relevante Informationen zu erkennen und auszuwerten.

14. Computerlesbares Medium, auf welchem computerlesbare Instruktionen gespeichert sind, die, wenn sie von einem oder mehreren Prozessoren gelesen werden, den einen oder mehreren Prozessoren veranlassen, das Verfahren nach einem der vorhergehenden Ansprüche durchzuführen.

15. KI-basiertes System zum dynamischen Messen, umfassend:
einen KI-Messungsassistenten, der einem Anwender ermöglicht eine Messkonfiguration vor dem Messbetrieb zu erstellen; und
ein trainiertes Logger-KI-System, das ausgelegt ist, während des Messbetriebs, relevante Messverläufe oder Messwerte zu identifizieren.

16. KI-basiertes System zum dynamischen Messen nach Anspruch 15, ferner umfassend
eine KI-Wissensdatenbank, die ausgelegt ist, KI-Wissen aus dem trainierten Logger-KI-System zu importieren und in das Logger-KI-System zu exportieren; und
einen Messkern, der ausgelegt ist, Messwerte von Messschnittstellen zu empfangen, einen Messstrom aller Messwerte an das Logger-KI-System zu senden, relevante Zeitbereiche und Messsignale vom Logger-KI-System zu empfangen und relevante Messwerte in einer Messungsdatei zu speichern.

17. KI-basiertes System zum dynamischen Messen nach einem der Ansprüche 15 oder 16, wobei der KI-Messungsassistent eine vom Anwender definierte Messaufgabe und Messziel sowie Schnittstellenbeschreibungen und Beschreibungsdateien als Eingabe erhält, um relevante Informationen aus der Eingabe zu erkennen und diese dem trainierten Logger-KI-System bereitzustellen.

18. KI-basiertes System zum dynamischen Messen nach einem der Ansprüche 15 bis 17, wobei der Messkern ausgelegt ist, relevante Messwerte in eine Messungsdatei zu speichern.

19. KI-basiertes System zum dynamischen Messen nach einem der Ansprüche 15 bis 18, ferner umfassend:
eine Logger-Hardware, die Messwerte von Schnittstellen an den Messkern liefert.

20. KI-basiertes System zum dynamischen Messen nach einem der Ansprüche 15 bis 19, wobei die Messwerte wenigstens eines umfassen von: gemessene Temperatur, Beschleunigung, Druck oder Spannung.
